# EUROPEAN PATENT SPECIFICATION

(11) **EP 2 036 306 B1**
(45) Date of publication and mention of the grant of the patent: **08.04.2015**
(21) Application number: 07845189.5
(22) Date of filing: 19.06.2007
(51) Int. Cl.: H04L 29/06

(54) **SECURE DOMAIN INFORMATION PROTECTION APPARATUS AND METHODS**
SYSTEM UND VERFAHREN ZUM SICHEREN SCHUTZ VON DOMÄNENDATEN
APPAREIL ET PROCÉDÉS DE PROTECTION D'INFORMATIONS DE DOMAINE SÉCURISÉ

(30) Priority: 20.06.2006 US 815134 P; 25.08.2006 US 467387
(43) Date of publication of application: 18.03.2009
(73) Proprietor: ALCATEL LUCENT, 92100 Boulogne-Billancourt (FR)
(72) Inventor: STRUB, Lyle, Ottawa, Ontario K2C 2G2 (CA); WHITEHEAD, Brad James, Kingston, Ontario K7M 7H1 (CA); PAPANDREOU, George, Ottawa, Ontario K1B 4G1 (CA)
(74) Representative: Sciaux, Edmond
(86) International application number: PCT/IB2007/053429
(87) International publication number: WO 2007/148314

(56) References cited:
- US-A1- 2006 053 479
- US-A1- 2006 075 135

## Description

### Field of the Invention

This invention relates generally to communications and, in particular, to providing protection of information for secure domains.

### Background

Inter-business application integration has long been an important task for corporations in some vertical market segments. Corporations need to exchange digital information for many purposes, and often the data being exchanged must be kept private between only the two parties involved in the exchange. For industries where the exchange of data that is very sensitive occurs regularly, government regulations have been created to ensure that appropriate measures are taken to protect that data. In the U.S., for example, the Health Insurance Portability and Accountability Act (HIPAA) stipulates the privacy regulations on the storage and exchange of personal medical data for health care providers, and the Gramm-Leach-Bliley Act serves a similar purpose in the financial services industry.

Protection of sensitive application data may take many forms depending on the nature of a corporate network for example, but perhaps the most pressing data privacy needs are from industries where regulations have been established to hold businesses accountable for protecting the personal data of their customers. The above-noted HIPAA and the Gramm-Leach-Bliley Act are examples of such privacy regulations.

Service Oriented Architectures (SOAs) facilitate the exchange of data, but make the enforcement of data privacy requirements very difficult or even impossible. An application server in a corporate SOA infrastructure might not be aware of whether the ultimate consumer of any of its services is external to the corporation, especially where an application server exposes a service to users through a portal for instance.

In general, services for which information is distributed through a communication network may be referred to as network services. "Web services" are an example of network services, and represent the next generation of technology being used for automatically exchanging information between different applications over the public Internet and many private networks. Web services provide a framework for building web-based distributed applications, and can provide efficient and effective automated machine-to-machine communications.

From a technology point of view, web services are network accessible functions that can be accessed using standard Internet protocols such as HyperText Transfer Protocol (HTTP), extensible Markup Language (XML), Simple Object Access Protocol (SOAP), etc., over standard interfaces.

The real power of web services technology is in its simplicity. The core technology only addresses the common language and communication issues and does not directly address the onerous task of application integration. Web services can be viewed as a sophisticated machine-to-machine Remote Procedure Call (RPC) technology for interconnecting multiple heterogeneous untrusted systems. Web services take the best of many new technologies by utilizing XML technology for data conversion/transparency and Internet standards such as HTTP and Simple Mail Transfer Protocol (SMTP) for message transport.

One of the primary drivers behind the development and standardization of web services is the ability to facilitate seamless machine-to-machine application-level communications by providing a loose coupling between disparate applications. Such a loose coupling of applications allows applications on different servers to interoperate without requiring a static, inflexible interface between them. Applications using very different technologies can interoperate using standard web services protocols.

Even though web services are still an emerging technology, the potential for data exchange between applications is very large, and accordingly so is the risk of releasing sensitive data without proper authorization or protection.

A network services environment, while simplifying information exchange, can complicate the issue of protecting sensitive data. Some data protection solutions ensure secure storage of data and end-to-end encryption during transfer. This type of solution is not always possible, since data processing may be required at an intermediate point. This is particularly true for web services, where web service messages may require transformation in transit. Composite web services in an SOA may combine data from many individual services to orchestrate part of a business process for instance. This methodology is a powerful tool for business applications, but it does not support end-to-end encryption.

There are also existing solutions that will encrypt all messages and data that leave a given security domain. Unfortunately, this solution does not scale well in many cases. Encryption is a computationally expensive function and therefore encrypting all data is very wasteful if only a small percentage of traffic is actually sensitive. Worse yet, this solution requires the receiving party to implement the same algorithm in order to decrypt data, which is not always feasible or economical.

Relying on a combination of "encrypted interfaces" and "unencrypted interfaces" does not ensure compliance to government privacy regulations - sensitive data may be accidentally sent on unencrypted links, for example.

Although e-mail gateways may be able to scan and selectively encrypt outbound e-mail that leaves a corporate mail server, providing data protection for web service messages and other service-related information is a fundamentally different problem, with a distinct technology base and document formats that are much less constrained than in the case of e-mail messages.

Another solution involves an XML-specific firewall type device that is programmable to provide encryption. The encryption is then not based in each application server. This represents an Access Control List (ACL) approach that is limited in terms of data detection flexibility and selectivity.

Document US 20060053479 A1 discloses a method for protecting sensitive data items which must be accessed in a memory of a computer system. A data hiding policy is defined. The policy includes one or more policy entries, each policy entry corresponding to an attribute of a data item and each policy entry indicating whether a data item having said attribute is to be hidden. When each data item is retrieved from the memory of the computer system, a determination is made whether a policy entry includes an indication that the retrieved data item is to be protected from exposure. If the data item is to be protected, an obscured representation of the data item is generated for external presentation. Obscuration may be accomplished by obfuscation, encryption, or substitution.

Thus, there remains a need for improved information protection schemes.

### Summary of the Invention

According to an embodiment of the invention, data privacy policies for web services messages can be enforced at the point where data leaves a security domain. Real-time identification of sensitive data and selective protection of only that sensitive data can be provided as a scalable solution.

Embodiments of the invention may also be used to provide a complete regulatory framework with service type-and user group- aware processing, regulation-specific modules for vertical markets, and/or semantic Artificial Intelligence (AI) for pattern-based searching.

In accordance with one aspect of the invention, there is provided a machine-implemented method according to claim 1.

The protection action may include one or more of dropping all of the service access information, removing only the sensitive information from the service access information, encrypting all of the service access information, encrypting only the sensitive information in the service access information, digitally signing all of the service access information, and digitally signing only the sensitive information in the service access information.

The operation of performing may involve performing the protection action on a portion of the service access information.

Determining may involve parsing the service access information.

In some embodiments, determining and performing involve executing a regulation specification language (RSL) program that defines sensitive information detection criteria and protection actions associated with an information protection regulation. The RSL program may include table entries specifying respective sensitive information detection criteria and corresponding protection actions, in which case executing may involve sequentially processing the service access information for each table entry. The RSL program may include extensible Stylesheet Language Transformation (XSLT) operations, and employ extensible Markup Language (XML) extensions to support encryption as the protection action.

The method may also include identifying a protection policy associated with the service access information. Determining may the involve determining whether the service access information includes sensitive information specified in the protection policy.

The operation of identifying may involve identifying a protection policy based on one or more of a destination of the service access information, a source of the service access information, the external user, and an external domain with which the external user is associated.

In some embodiments, the method is implemented at a web services node of a communication network within the secure domain.

The method may be embodied, for example, in instructions stored on a machine-readable medium.

An apparatus is also provided according to claim 14.

The protection action may include one or more of dropping all of the service access information, removing only the sensitive information from the service access information, encrypting all of the service access information, encrypting only the sensitive information in the service access information, digitally signing all of the service access information, and digitally signing only the sensitive information in the service access information.

The service access information processor may include a parser for parsing the service access information.

In some embodiments, at least one of the service access information processor and the protection module implements an RSL execution environment for executing an RSL program that defines sensitive information detection criteria and protection actions associated with an information protection regulation. The RSL program may include table entries specifying respective sensitive information detection criteria and corresponding protection actions, in which case executing may involve sequentially processing the service access information for each table entry. The RSL program may include XSLT operations, which in some embodiments employ XML extensions to support encryption as the protection action.

The apparatus may also include a memory, operatively coupled to the service access information processor, for storing protection policies. The service access information processor may be further operable to identify in the memory a protection policy associated with the service access information, and to determine whether the service access information includes sensitive information by determining whether the service access information includes sensitive information specified in the protection policy.

The service access information processor may be operable to identify a protection policy based on one or more of a destination of the service access information, a source of the service access information, the external user, and an external domain with which the external user is associated.

The apparatus may be implemented, for example, in a web services node, which may be within the secure domain or in an external domain with which the external user is associated.

A further aspect of the invention provides a machine-readable medium storing a data structure. The data structure includes a detection criterion identifying sensitive information, and a protection action field identifying a protection action to be performed to protect the sensitive information identified in the detection criterion where the identified sensitive information is detected in service access information associated with access, by an external user that is outside a secure domain, to a service provided in the secure domain.

The data structure may also include an action target field identifying a portion of the service access information on which the protection action is to be performed.

Other aspects and features of embodiments of the present invention will become apparent to those ordinarily skilled in the art upon review of the following description.

### Brief Description of the Drawings

Examples of embodiments of the invention will now be described in greater detail with reference to the accompanying drawings.
Fig. 1 is a block diagram of a communication system.
Fig. 2 is a block diagram of an apparatus according to an embodiment of the invention.
Fig. 3 is a flow diagram of a method according to another embodiment of the invention.
Fig. 4 is a flow diagram of a method according to a further embodiment of the invention.
Fig. 5 is a block diagram of a data structure according to another embodiment of the invention.

### Detailed Description of Preferred Embodiments

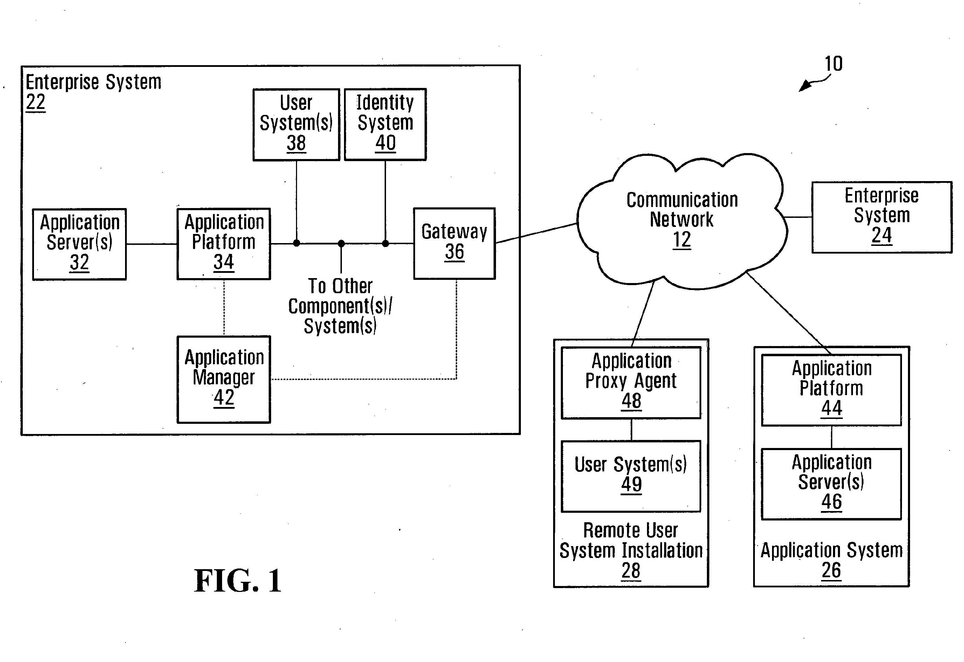

Fig. 1 is a block diagram of a communication system in which embodiments of the invention may be implemented. The communication system 10 includes a communication network 12, to which enterprise systems 22, 24, an application system 26, and a remote user system installation 28 are operatively coupled through respective communication links.

The enterprise system 22 includes one or more application servers 32, an application platform 34 operatively coupled to the application server(s), a gateway 36 operatively coupled to the application platform and to the communication network 12, one or more user systems 38 operatively coupled to the application platform and to the gateway, an identity system 40 operatively coupled to the application platform, to the user system(s), and to the gateway, and an application manager 42 operatively coupled to the application platform and to the gateway. Other components or systems, such as firewalls located on either side of the gateway 36 to provide a DeMilitarized Zone (DMZ), may also be deployed. The enterprise system 24 may have a similar structure.

In the application system 26, an application platform 44 is operatively coupled to the communication network 12 and to one or more application servers 46. The remote user system installation 28 includes an application proxy agent 48 operatively coupled to one or more user systems 49.

Although many enterprise systems, application systems, remote user system installations, and possibly other types of systems may be provided in a communication system, only illustrative examples of certain types of systems have been shown in Fig. 1 to avoid overly complicating the drawing. Internal details of the communication network 12, such as border or access equipment and core switching/routing components, and the enterprise system 24 have also been omitted from Fig. 1 for similar reasons. The type, structure, and operation of the communication network 12 may vary between deployments of embodiments of the invention. Other embodiments of the invention may also include enterprise systems, application systems, and/or remote user system installations that include fewer, further, or different components, with similar or different interconnections, than shown.

It should therefore be appreciated that the communication system 10 of Fig. 1, as well as the contents of the other drawings, are intended solely for illustrative purposes, and that the present invention is in no way limited to the particular example embodiments explicitly shown in the drawings and described herein.

Those skilled in the art to which the present invention pertains will be familiar with many different types of communication networks, including overlay networks such as application layer networks and more traditional infrastructures. The present invention is not limited to any particular type of communication network. In one embodiment, the communication network 12 is the Internet or some other public network.

Many examples of access technologies through which the systems 22, 24, 26, 28 access the communication network 12 will also be familiar to those skilled in the art, and accordingly have not been separately shown in Fig. 1.

Considering first the enterprise system 22, an application server 32 supports applications that may provide functions, illustratively services, for use by at least the local user system(s) 38. Where multiple application servers 32 are deployed, each server supports a respective set of functions or services, which may or may not overlap the services supported by other servers.

In some embodiments, these functions are also made available for use by external user systems, such as user systems in the enterprise system 24, where owners or operators of the enterprise systems 22, 24 have an agreement for inter-system access by their users, and/or the user system(s) 49 at the remote user system installation 28.

References herein to use of applications are intended to convey the notion of any such function. Generally, an application server 32 executes a software application to provide these functions. A service, such as a web service, is an example of an application function that is exposed to user systems, in the context of the present disclosure. Any references to applications, functions, and services should be interpreted accordingly.

An application server 32 may include such components as one or more processors, one or more memory devices, and an interface for exchanging application transaction information, such as service request messages and corresponding responses, with user systems. Memory devices in an application server 32 may be used to store operating system software, application software, etc., for use by the application server processor(s). Enterprise systems such as 22 are often implemented as a network, in which case a network interface enables the application server(s) 32 to communicate with the user system(s) 38 and possibly other components of the enterprise system. In another possible implementation, an application server 32 includes separate interfaces for communicating with different enterprise system components.

A user system 38 may similarly include one or more processors, one or more memory devices, and some sort of interface(s) for communicating with the application server(s) 32, and possibly other components of the enterprise system 22. Operating system software, client software for interacting with the application server(s) 32, and/or other types of information may be stored in user system memory devices.

Those skilled in the art will be familiar with many different types of systems that provide and/or use network applications. Embodiments of the present invention relate primarily to protecting sensitive information associated with the use of network applications, as opposed to how these applications are actually supported, and accordingly the application server(s) 32, the user system(s) 38, and their operation are described only briefly herein to the extent necessary to illustrate aspects of the invention.

The identity system 40 represents another component that is commonly provided in enterprise systems such as corporate networks and will be familiar to those skilled in the art. Access to services or other functions supported by the application server(s) 32 in many cases must be restricted to a particular set of users. The identity system 40, which may authenticate users and/or user systems through interaction with a Lightweight Directory Access Protocol (LDAP) directory or other type of user database, for example, supplies a digital identity that may be used for authorizing or denying access to network services.

In terms of structure, the application platform 34 includes application server interfaces that are compatible with the user system interfaces, illustratively Application Programming Interfaces (APIs), of the application server(s) 32, one or more interfaces compatible with the application server interface(s) of the user system(s) 38, and components for processing messages or other information received and/or transmitted through these interfaces. As described in further detail below, external user systems may be able to access the application server(s) 32 through the gateway 36, in which case the user system interface(s) of the application platform 34 may also enable the application platform to communicate with the gateway 36. However, in some embodiments, a separate gateway interface may be provided for this purpose.

The gateway 36 would also include one or more internal interfaces compatible with interfaces of other components of the enterprise system 22, one or more external interfaces for enabling communication signals to be transmitted and/or received through the communication network 12, and intermediate components for processing signals received and/or transmitted through the interfaces.

The application manager 42 represents a control or monitoring element that might not itself perform real-time processing of information as it is transferred between the application server(s) 32 and the local user system(s) 38 or external user systems. The application manager 42 may communicate with the application platform 34 and the gateway 36 through compatible interfaces, to perform such functions as configuring the application platform and/or the gateway, illustratively by downloading protection policies to the platform and/or the gateway for enforcement.

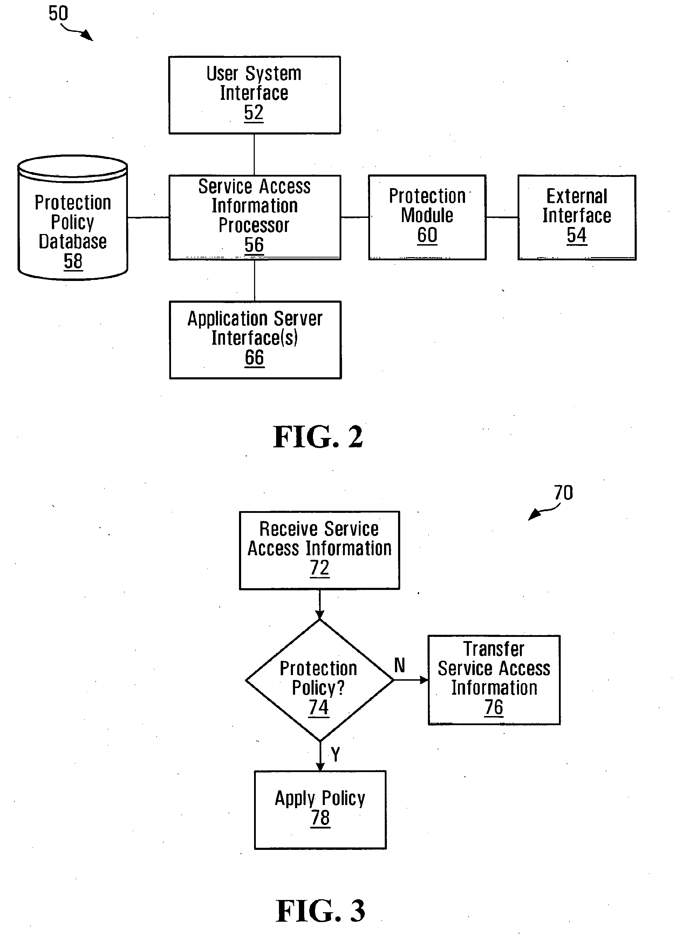

The internal components of the application platform 34, the gateway 36, and the application manager 42 may be implemented in hardware, software, firmware, or some combination thereof. An apparatus as described below with reference to Fig. 2 provides an illustrative example of a subsystem that may be provided in the application platform 34 or the gateway 36.

In a traditional deployment of a so-called Service Oriented Architecture (SOA) for an enterprise network, SOA components are individually deployed and integrated on each application server. Publishing a service for use on a network, within the enterprise system 22 for instance, would require a service registry for discovery and management of service offerings. Although web service standards address the need to restrict service access to authorized users, a web services policy server would be needed to store and provide this information. Enforcing these policies can also be a challenge, in that software vendors may require substantial changes to applications and servers in order to adapt to enterprise systems.

All of this can represent a significant project for an enterprise, and may well have a relatively long implementation cycle. In addition, the skill set required to implement such a project is highly specialized, which might make an SOA implementation not economically feasible.

When extending web services or other types of applications to partners, between the enterprise systems 22, 24, for example, even more challenges exist for an SOA infrastructure deployed on application servers. For instance, applications deployed at partner sites might use diverse security mechanisms that cannot share user identity information freely, requiring translation of security tokens for users. Placing the burden of security token translation, or other security functions, on each application server tends to be costly and inefficient.

Data privacy requirements are also very difficult or even impossible to enforce at each application server since application servers themselves might not be aware of whether a user system, or more generally a consumer of its service, is external to its enterprise system.

XML-specific denial of service (XDoS) attacks, and possibly other threats, may be particularly problematic in application server-based SOA implementations. Web services, for example, are open to XDoS attacks, which cannot be effectively dealt with on application servers.

The migration of server-based SOA to a web services model to achieve application interoperability via loosely coupling applications necessitates the need for additional messaging, illustratively in the form of SOAP headers and XML messages, as well as additional processing requirements for managing these messages. This additional overhead consumes network bandwidth and can result in significant new requirements for application server hardware.

An alternate model for deployment of an SOA infrastructure is to integrate the SOA components into enterprise network elements, as shown in Fig. 1. The application platform 34, the gateway 36, and the application manager 42 represent SOA components in the enterprise system 22.

Deploying the SOA infrastructure separately from the application server(s) 32 may provide several benefits: the SOA infrastructure is then application agnostic, applications require minimal modification, the SOA infrastructure is an end-to-end integrated solution, application server processing overhead is minimized, and network bandwidth can be optimized.

With an enterprise system-/network-based SOA deployment, any message translations required for applications to interoperate can be performed according to policies set within the enterprise system, not by the applications themselves. This allows translations to be defined independently of applications, removing the reliance on application vendor implementations.

The business logic required to adapt message format and content is thus provided by the enterprise, not by the application, minimizing application modification. Web services messages, for example, can be adapted within an enterprise network to achieve application interoperability. As new interoperability requirements arise, perhaps due to merger, acquisition, or the need to integrate with a new partner, no application modification is required. New policies for message translation can instead be defined to provide for the new interoperability.

An SOA infrastructure deployed as an integrated enterprise network solution can provide a single monitoring, control, and consolidated reporting point, illustratively the application manager 42. This can be important to enable proper corporate governance, continuous corporate improvement, and the ability to demonstrate compliance with regulations concerning data privacy and network security, for instance.

Application server processing requirements for application interoperability can be significantly reduced for two reasons: application server offload and a reduced number of required translations. Translations can be done once, at the application platform 34, for example, and then forwarded onto multiple destinations rather than each application performing its own translation.

The network bandwidth consumed by additional message traffic can be reduced by routing packets to the application server(s) 32 based upon inspecting the message SOAP headers, XML tags, or other message content. Routing can be sensitive to application contexts rather than based on static IP addresses, for example.

If application server functions are to be extended to partner enterprise systems, an SOA infrastructure deployed as enterprise network infrastructure may provide many further advantages. Translation of security tokens can be done once at the demarcation point between the partners' networks, illustratively at the gateway 36 for external accesses to the application server(s) 32, providing a single enforcement point for security policy. Data privacy can also be enforced at the point where data leaves a security domain, again at the gateway 36, for example. This drives efficiencies and reduces costs. In addition, denial of service attacks targeted at corporate web services can be defended at the gateway 36, the enterprise network edge, which is perhaps the most secure place to deal with this issue.

The application platform 34 provides an SOA infrastructure for integrating applications that traditionally have run as stand-alone applications, and may enable such capabilities as controlling and monitoring all activity initiated by a validated user to thereby allow generation of a consolidated audit trail, translation for message and document formats, managing the life cycle for applications including the staged rollout of web services and rollback to previous versions in the event of unexpected behavior for instance, and monitoring application/service performance to ensure that applications/services meet internal corporate requirements.

This listing of example functions of the application platform 34, like other functional examples noted herein, is by no means restrictive or exhaustive. Many functions may be implemented independently, every embodiment need not necessarily provide all functions, and other functions may also be or become apparent to those skilled in the art.

Benefits of the application platform 34 may include reduced application integration cost through minimum change to existing applications, as noted above, ensuring that access to corporate applications complies with Government regulations, a central monitoring and control point for employee access to web services, and continuous corporate improvement through consolidated reporting.

The gateway 36 effectively extends an intranet SOA provided by the enterprise system 22, through the communication network 12, into an extranet, allowing seamless integration with customers and partners without compromising security or privacy. Functions of the gateway 36 may include, possibly among others, any or all of extending applications to a partner extranet and branch locations, providing seamless mobility for partner access to applications, ensuring partner access to corporate applications complies with Government regulations, and maintaining privacy of corporate identities without compromising traceability.

In providing mobile access to the application server(s) 32 from any partner sites associated with the enterprise system 22, the gateway 36 may allow the secure identification of partner institutions and acceptance of identities between different security domains. Application message and data translations, for user systems associated with external partner sites, may also be provided by the gateway 36, while ensuring that all data remains private as per corporate policy. A consolidated audit trail of all application access may be collected and provided to an external partner enterprise system by the gateway 36, to demonstrate conformance with regulations for instance.

The application manager 42 provides a central point for monitoring and control of the application platform 34, the gateway 36, and any other platforms and gateways (not shown) in the enterprise system 22. Globally consistent policies for all applications, so as to ensure improved corporate governance and/or compliance with Government regulations, can also be established in some embodiments through the application manager 42 and distributed to the application platform 34 and to the gateway 36 for enforcement. The central application manager 42 may also provide for globally consistent application change management.

As noted above, the enterprise system 24 may be substantially similar to the enterprise system 22.

The enterprise system 22 includes both application server(s) 32 that support applications and one or more user system(s) 38 that may use those applications. However, it should be appreciated that application servers and user systems need not necessarily be co-located. The application system 26, for example, includes one or more application servers 46, but no local user systems. Although only an application platform 44 is shown in the application system 26, some implementations of an application system might also include a gateway. Whereas the application system 26 as shown might be suitable, for example, for a remote data center that is associated with a primary data center as the enterprise system 22, a stand-alone or "unaffiliated" application system that hosts applications for use by external user systems might also include a gateway for handling authentication of the external users for instance.

The application platform 44 in the application system 26 may interact with the application manager 42 of the enterprise system 22, or more generally the application manager of its affiliated enterprise system. In the case of a stand-alone application system, a local application manager may be provided. In some implementations, an external services controller interacts with SOA infrastructure components in multiple different domains. For example, an external services controller that is operatively coupled to the communication network 12 might configure the gateway 36 and a gateway in the enterprise system 24 to collect and exchange application performance statistics.

A user-only deployment is shown in Fig. 1 as the remote user system installation 28. The application proxy agent 48 allows the user system(s) 49 at a partner or branch location, for example, to use applications provided by remotely located application servers. In one embodiment, the application proxy agent 48 is a scaled-down version of the gateway 36. The application proxy agent 48, like the gateway 36, might maintain privacy of corporate identities during authentication of the user system(s) 49 with the enterprise system 22 without compromising traceability, and support secure communications through the communication network 12 using tunnelling techniques, for example, but need not necessarily be able to authenticate external users since the remote user system installation 28 does not host applications that could be used by external user systems.

In operation, a user system 38 that wishes to make use of an application provided by an application server 32 is first authenticated by the identity system 40. Those skilled in the art will be familiar with many security schemes that may be used for this purpose, such as username/password authentication. Where remote access to an application server 32 is supported, user authentication may be handled by the gateway 36, possibly through interactions with an external identity system. The gateway 36 may also be involved in authentication when a user system that is associated with a partner enterprise system or site is locally connected to the enterprise system 22 and wishes to access an application server 32.

When a user has been authenticated, messages or other forms of information may be exchanged between a user system and the application server(s) 32. A user may be allowed to access multiple applications after a single successful authentication.

As noted above, improved techniques for protecting information that is to be transferred outside of a secure domain are needed. A data protection scheme according to an embodiment of the present invention may include a detection stage and a protection stage. The detection stage detects sensitive information, in web service messages for instance, that should be protected in transit. The protection stage performs an action, which may be configurable in some embodiments, on the detected sensitive information, and possibly entire messages.

The detection process may be service-specific, and can take several forms such as protecting all service access information to/from a service, protecting service access information only to/from certain users, and/or protecting service access information only if certain fields are present in a service message. Whether protection is to be applied, and if so the protection mechanism to be used, may be specified in a global policy or a policy that is specific, to a service, server, or user for example. Possible protection actions might include any or all of discarding a message or just detected sensitive information, digitally signing a message or just detected sensitive information, encrypting all or part of a message, and possibly others.

The techniques disclosed herein could be implemented, for example, at the gateway 36 in a corporate network. In this case, the gateway 36 is configured to process service-related information such as web service messages that may enter and leave their security domain. When this feature is provisioned via web service policies, for example, gateways such as 36 become network resident data protection assurance points and/or encryption points. This can be a very important feature in a gateway, since it directly addresses an immediate need for network and application administrators in multiple market segments. Where the gateway provides external access to local services, through a registry for instance, the gateway also has a high awareness of the service and therefore can be more selective regarding the protection that is applied.

Gateway- and/or application platform-based embodiments of the invention may be particularly suited for SOA settings. In other embodiments, a protection mechanism may be integrated with an application server or other network component.

Fig. 2 is a block diagram of an apparatus according to an embodiment of the invention. The apparatus 50 includes a user system interface 52, an external interface 54, a service access information processor 56 operatively coupled to the user system interface, to a protection policy database 58, and to one or more application server interface(s) 66, and a protection module 60 operatively coupled to the service access information processor and to the external interface.

As noted above with reference to Fig. 1, the contents of the drawings are intended solely for the purposes of illustration. A device in which the apparatus 50 is implemented may include additional components that have not been explicitly shown, for example. These components might take various forms depending on the point at which, or the device/system in which, the apparatus 50 is implemented. In general, other embodiments of an apparatus may include further, fewer, or different components than explicitly shown, with similar or different interconnections.

The types of connections through which the components of Fig. 2 are operatively coupled may, to at least some extent, be implementation-dependent. Electronic devices often use various types of physical connectors and wired connections. In the case of cooperating software functions, for example, an operative coupling may be through variables, registers, or commonly accessed areas of a memory, and thus include a logical coupling.

Hardware, software, firmware, or combinations thereof may be used to implement components of the apparatus 50. Processing elements such as microprocessors, microcontrollers, Programmable Logic Devices (PLDs), Field Programmable Gate Arrays (FPGAs), Application Specific Integrated Circuits (ASICs), and other types of "intelligent" integrated circuits may be suitable for this purpose.

The apparatus 50 may interact with other components of a local communication network and a partner network through the interfaces 52, 54, 66. These interfaces may be of the same type or different types, or even be the same interface where the same communication medium is used for information transfers with all other components. However, in many implementations, it is likely that the user system interface 52 will differ from at least the application server interface(s) 66, and that multiple application server interfaces of different types may be provided for different application servers. The external interface 54 may be another different interface.

The user system interface 52 enables the apparatus 50 to exchange application access information such as web service messages with user systems. Each application server interface 66 similarly allows the apparatus 50 to exchange application access information with a respective set of one or more application servers. This type of architecture for the apparatus 50 might be appropriate, for example, when the apparatus is implemented at a gateway for protecting transfers associated with usage of applications from external user systems, since a gateway might handle all application access information for an enterprise system. However, it should be appreciated that other implementations are also possible.

Through the external interface 54, the apparatus 50 may exchange information with remote user systems. In the system of Fig. 1 for instance, exchanges between the enterprise systems 22, 24 may involve transfer of information through the communication network 12 and appropriate network interfaces at the enterprise systems. Network interfaces compatible with the communication network 12 may be provided at the gateway 36 and a corresponding gateway at the enterprise system 24. According to one embodiment of the invention, a gateway in an enterprise system is responsible for providing protection for information as it crosses the boundary of the enterprise system's security domain.

The structure and operation of the interfaces 52, 54, 66 will be dependent to at least some extent on the communication media and protocols used in information transfers. Those skilled in the art will be familiar with many types of interfaces through which application access information may be received and/or transmitted by the apparatus 50. These interfaces may also vary depending on where in an enterprise system or other secure domain the apparatus 50 is implemented.

The protection policy database 58 may be provided in one or more memory devices. Solid state memory devices are common in electronic equipment, and the protection policy database 58 may be implemented using one or more memory devices of this type. However, other types of memory devices, including memory devices for use with movable or even removable storage media, may also or instead be used to store the protection policy database 58.

Protection policies may be specified as part of a policy for a service, which might also include service access restrictions, information translation/formatting requirements, and/or monitoring requirements for usage of the service, or separately. Any or all of user-specific policies, application/service-specific policies, and local enterprise-wide policies may be established by enterprise system administrators to control whether and how information is protected for external transfers.

As noted above, components of the apparatus 50 may be implemented using hardware, software, and/or firmware. These components are therefore described herein primarily in terms of their function. Based on the functional descriptions, a person skilled in the art will be enabled to implement service monitoring techniques according to embodiments of the invention in any of various ways.

In operation, the service access information processor 56 and the protection module 60 protect sensitive information such as application data of a corporation. This protection may be based on regulation-aware policies and flexible service access information processing. The improved selectivity and flexibility of embodiments of the invention can be particularly useful in conjunction with web services and other information exchange schemes that present both a unique challenge, and opportunity, for guaranteeing the security of transmitted data based on corporate and/or government regulations.

Perhaps the most efficient point at which to implement information protection for a secure domain is at the border of such a domain, where sensitive information may pass to and/or from a public or otherwise insecure external system. The enterprise system gateway 36 (Fig. 1) is an example of one such border device, which may be implemented using XML processing devices for instance, to guarantee the protection of corporate or other data.

One key feature of data protection using a gateway is the ability to enforce the protection of all data leaving and/or entering a secure domain. To achieve this type of functionality, a communication network such as an enterprise network might be configured in such a way that all XML and service-related traffic is processed by the gateway. In the system 10 of Fig. 1, the gateway 36 handles all external communications, inbound and outbound, for the enterprise system 22. For example, all external service-related requests generated by clients such as the user system(s) 38 in the enterprise system 22, responses from external servers such as application servers in the enterprise system 24 or the application server(s) 46 in the application system 26, requests from external clients such as user systems in the enterprise system 24 or in the remote user system installation 28 for access to the application server(s) 32, and responses by the application server(s) 32 to externally initiated requests are all processed by the gateway 36.

It should be appreciated, however, that the apparatus 50 need not necessarily be implemented only in a gateway. In the application system 26, for example, the apparatus 50 might be implemented at the application platform 44 to protect information transferred externally through the communication network 12 between the application server(s) 46 and remote clients. Similarly, the application proxy agent 48 could implement the apparatus 50 to protect sensitive information transferred to or from its user system(s) 49. A protection mechanism could similarly be implemented at application servers and/or user systems.

The service access information processor 56 receives and processes service access information, illustratively service messages, to determine whether those messages include sensitive information that should be protected. Service messages represent an example of a type of service-related information that might include sensitive information. However, the present invention is in no way limited to any particular format of service-related information.

For example, the techniques disclosed herein could be applied to service access information that has already been formatted for transfer between an application server and a user system, as a web service message for instance, or to service access information that is to be included in such a formatted message or block. Suppose that a service that resides in the network of a health care provider is to distribute patients' medical information only within a secure domain, and that a discard protection action is to be performed for service messages destined for external user systems outside the secure domain. Where a protection mechanism operates on service messages, a service message that contains a patient's medical information is discarded. Another possible option is to determine that a patient's medical information is to be included in an externally destined service message, and to prevent or block access to that information entirely, illustratively by dropping the service access request before it reaches the service.

References herein to service access information and service messages should therefore be interpreted accordingly. Functions described as being performed in respect of service messages might also or instead be performed on other types of service access information.

In one embodiment, functions of the service access information processor 56 are implemented using several high-level components, including a regulation specification language (RSL), an RSL compiler, and an RSL execution path or environment. These components are described in further detail below.

The RSL is a high-level construct used to specify corporate or government regulations for sensitive information protection policies in a flexible manner. The RSL can be used to detail both how the detection of sensitive information is performed by the service access information processor 56 and the protection mechanism to be performed by the protection module 60.

A sensitive information detection decision made by the service access information processor 56 may be based, for example, on any or all of: details about the service with which received service access information is associated, details about the external user of the service, and/or the resolution of specific queries on the service access information. One possible method of specifying detection criteria is as a series of XPath/XQuery statements used to parse XML documents and SOAP messages.

The RSL may also contain powerful "libraries" or modules that offer complete criteria for conformance to specific regulations. For example, a HIPAA library could be used to ensure that all services messages comply with HIPAA privacy restrictions for the exchange of health information, without requiring an administrator to configure them directly. These libraries represent an example of certified regulation- or requirement-specific modules that could be initially deployed or dynamically downloaded to a gateway or other device at which the apparatus 50 is implemented. A module could be downloaded to a gateway with a protection policy that requires the module, for example. Enabling or selecting regulation-specific modules could be handled separately, such that particular modules of a set of currently deployed modules may be selected for use as needed.

A service access information processor 56, or a detection stage therein, could also or instead include an AI unit that facilitates content-based detection of sensitive information in documents where the structure is unknown, illustratively by pattern matching. For example, an AI unit could be used to detect the unauthorized or inadvertent release of company financial data.

Ensuring that service messages conform to privacy regulations may entail processing messages at high speeds, within an XML processing device for instance. To achieve high processing speeds, RSL source code may be compiled into a concise and optimized format, referred to herein as an RSL program, which describes the steps that must be taken to protect a transmission. The program can be specific to a service or may be applicable to many services based on web services standards, for example, and common government regulations.

An RSL program may be represented in a table-based format or in an extensible Stylesheet Language Transformation (XSLT) format. In a table format, a detection criterion could be mapped to a protection action that is to be performed when information satisfying the criterion is detected, and also to an action target, illustratively a message or specified portion of a message, on which the protection action is to be performed. This mapping may be explicitly specified, or implicit in a table format, where a detection criterion and its associated protection action and action target are stored in the same table column or row, for instance.

A protection action describes the operation that should be performed on service access information. A "Discard-Not Found" protection action, for example, might be used to specify that if the detection criterion is not satisfied, then an entire message is to be discarded. This type of protection action blocks external transfers of messages that do not include specific data. A "Discard-Message" protection action might also result in a message discard, although in this case a message is discarded if it contains sensitive information specified in the detection criterion. This type of action is useful to prevent specific information from being released externally.

Protection actions may, but need not necessarily, be applied to an entire message or other block of received service access information. Action targets allow protection actions to be applied to particular parts of a message or service access information. For a "Discard-Target" action, for example, a specified action target is discarded if a detection criterion is satisfied.

Encryption is another example of a possible protection action that might be performed on service access information or an action target if a detection criterion is or is not satisfied. Digital signatures do not protect the confidentiality of sensitive information, but might be useful for the purposes of non-repudiation or protecting information integrity, for example.

Other protection actions are also possible.

As noted above, a table format is one option for representing an RSL program. An alternate method to represent an RSL program is to use XSLT. XSLT is a language that is defined in XML specifications and describes a program that can transform XML documents into other forms. Although XSLT transformation operations are defined by standards that do not support encryption, it is possible to extend the standards to include support for encryption as a protection action. An RSL compiler could potentially transform RSL source code into XSLT using custom extensions for encryption. The XSLT could then be executed on XML documents in an RSL execution environment, resulting in correct fields being encrypted, signed, removed, etc. An RSL execution environment provided in the service access information processor 56 and the protection module 60, for example, would receive an XML message as input, apply an RSL program to the message, and return modified XML as an output. If the RSL action is to discard the message, however, no modified XML would necessarily be returned.

An RSL program represents an example of an implementation that integrates detection and protection functions into a single functional element, the RSL execution environment, and illustrates that the present invention is in no way limited to the division of functions shown in Fig. 2. References herein to a separate service access information processor and protection module should be interpreted accordingly, to cover embodiments in which detection and protection are implemented in one, or more than one, functional element.

Suppose that the RSL execution environment is running within the apparatus 50 in an enterprise system gateway. In response to a request received from an external client, an application server in the enterprise system sends a message to the gateway, and the message arrives at the service access information processor 56 through an application server interface 66. It should be noted that the external request message could have been processed by the apparatus 50 substantially as described herein, although in many implementations the primary focus of information protection might be the protection of information that is stored at an enterprise system and is being forwarded outside that system, i.e., the application server response message in this example.

The service access information processor 56 may process the received message by performing such operations as parsing the message into a suitable format to expedite data detection and/or protection. In a hardware-assisted embodiment of the service access information processor 56, parsing of XML documents is handled by an XML parsing chip.

Based on the address to which the service message is destined and/or one or more other criteria such as user-or partner corporation-specific data, the protection policy that applies to the message is identified in and retrieved from the protection policy database 58 by the service access information processor 56. As noted above, a protection policy may be specified in a service policy, along with other service-related policies, or separately.

If the protection policy specifies an RSL program, then the RSL program execution begins. The RSL program may be stored in the protection policy database 58 or in a separate memory device or area. A protection policy stored in the database 58 might include the appropriate RSL program or an identifier such as a name or storage address of the RSL program. While it is possible that multiple RSL programs or policies might be applicable to a single message, a single policy might govern data protection for all messages relating to the same service.

The RSL program returns an output in the form of a modified message and/or a code or other indication specifying whether the message should be dropped. If the message is not discarded, then the modified message returned by the RSL program corresponds to the original received message with the appropriate protection action applied. In the apparatus 50, the protection module 60 performs protection actions. A modified message is provided to the external interface 54 for transfer, unless the protection action is to drop the entire message.

If the message is to be discarded, then a SOAP fault or other error indication can be transmitted to the originating client by the protection module 60.

Inbound messages need not necessarily be processed by the service access information processor 56 and the protection module 60 in this manner. However, the protection module 60 might still be involved in inbound message handling, where an inbound message or any part(s) thereof had been encrypted and/or digitally signed by an external gateway or protection apparatus. The protection module 60 may in this case decrypt encrypted information and/or check the digital signature on digitally signed information before that information is passed to the user system interface 52 or to an application server interface 66.

Embodiments of the invention have been described above primarily with reference to the communication system 10 of Fig. 1 and the apparatus 50 of Fig. 2. Fig. 3 is a flow diagram of a method according to another embodiment of the invention. The method 70 illustrates operations involved in selectively applying protection actions to service access information.

At 72, service access information such as a response message to an externally initiated access request is received. A determination is then made at 74 as to whether a protection policy should be applied to the received message. If so, then the policy is applied at 78, by performing one or more protection actions for instance. Otherwise, the service access information is transferred toward its destination at 76.

The method 70 is illustrative of one embodiment of the invention. Other embodiments may involve performing fewer, additional, or different operations, and/or performing operations in a different order than shown. For example, service access information or a modified version thereof might be transferred towards a destination at 76 after a policy is applied at 78. The illustrated operations, and others, may also be performed in any of various ways. Some of these variations will be apparent from the foregoing descriptions of Figs. 1 and 2, for example, and further variations may be or become apparent to those skilled in the art.

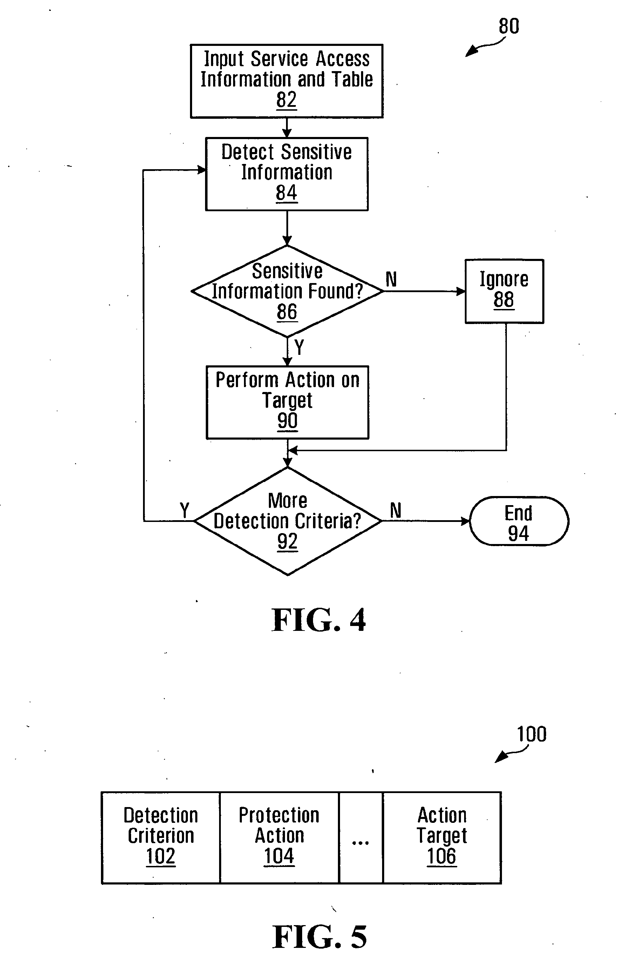

Fig. 4 is a flow diagram illustrating operations involved in executing an RSL program based on a table format. These operations may be performed at 78 (Fig. 3) in some embodiments.

At 82, the received service access information and a table-based RSL program are input to an execution unit. A table position counter is initially set to 0 to index the first table entry. The table entry is passed to a detection mechanism. The detection mechanism, shown at 84, might run an XPath/XQuery against a received XML message, for example, to determine whether a requested XML tag that contains sensitive information is present in the message. The true/false result of the query, represented at 86, determines if the protection action specified in the table entry should be performed at 90. For example, if a search for a <ProductInfo> tag returns true, the corresponding protection action is taken.

If the detection criterion or condition in the current table entry is not satisfied, then this entry is ignored, as shown at 88. A "Discard-Not Found" protection action is one exception to this flow, in that the received service access information would be discarded responsive to a false result.

Where the search returns true, the specified protection action is performed on the action target, or in some cases on an entire block of received service access information, at 90. Examples of possible protection actions have been described above. In some embodiments, the action target XPath/XQuery is evaluated and the protection action is performed on the action target.

If there are more detection criteria, table entries in this example, as determined at 92, then the table position counter is incremented to a next table entry and execution continues at 84. Otherwise the execution ends at 94, and modified service access information or a command to discard the received service access information is returned.

There may also be exceptions to the flow at 92, where the result of processing a table entry is that the received service access information is to be discarded. In this case, no further processing of the received service access information may be necessary, and the execution of the RSL program may be aborted.

Fig. 5 is a block diagram of a data structure according to another embodiment of the invention. The data structure 100 includes a detection criterion 102, a protection action 104, and an action target 106, and might be stored within a policy store or as a table entry in a table-based RSL program, for instance.

The detection criterion 102 identifies sensitive information for which the protection action 104 is to be performed. Search terms, XML tags, and the actual sensitive information to be detected, may be included in the data structure 100 at 102. A protection action may be identified at 104 using an action name, a memory location associated with software code in which the action is implemented, etc. Examples of detection criteria and protection actions have been described above.

The action target 106 might be specified in any of several ways, depending on the type of message or information to be processed. For web services messages, for example, the action target 106 might specify one or more message segments to which the protection action 104 would be applied when the detection criterion identified at 102 is, or in some cases is not, satisfied.

Variations of the data structure 100 might include fewer, additional, or different fields, and/or an arrangement of fields in a similar or different order than shown. A data structure might not include all of the fields shown in Fig. 5. An action target 106 could be omitted, for example, if a protection action is to be performed on an entire message. According to another possible variation, a data structure could possibly specify multiple detection criteria, multiple protection actions, and/or multiple action targets. Further variations may be or become apparent to those skilled in the art.

Embodiments of the invention provide the ability to enforce information privacy policy at the point where information leaves a secure domain, effectively decoupling information protection requirements from application design.

The techniques disclosed herein can be used to ensure and demonstrate that information access using web services, for example, meets all applicable regulatory and/or corporate information security requirements by determining whether information contained in a web service message should be protected. If no information is determined to be sensitive, then the message is sent to its destination without additional protection processing. Only messages containing information that is deemed sensitive enter a protection phase, where a configurable action such as filtering (discarding), digitally signing, and/or encrypting is applied to all or parts of the messages.

At a gateway or other access point through which external users can access a secure domain, it is possible to implement unique methods for detecting sensitive information in web service messages and ensure compliance with government regulations. The ability for a gateway to provide a complete regulatory and corporate governance solution for data protection allows it to address the immediate needs of network and application administrators in multiple vertical markets. Offering pre-provisioned and possibly certified packages for common regulations such as HIPAA can increase the value of the information protection feature in the vertical markets that the regulations address.

As previously described, end-to-end encryption is not a robust solution for web services. Encrypted interfaces also do not solve the root problem of regulatory compliance in a scalable way.

Real-time identification of sensitive information and selective protection of only that sensitive information, as proposed herein, is a scalable solution, but there are no currently available products that allow network and application administrators to choose this option for web service messages and other forms of service access information. As the use of web services and service oriented architectures grows, it will be increasingly important to have a scalable and flexible solution to this problem.

A web services gateway can thus be designed in accordance with the techniques disclosed herein to allow enterprises to provide corporate governance, demonstrate compliance with regulations, provide continuous improvement in their business processes, and integrate with the business processes of partner organizations. Information protection at a web services gateway allows the gateway to be a network-based enforcement point that eliminates the risk of regulatory non-compliance.

More generally, embodiments of the invention can be used to provide the complete functionality of a full service SOA infrastructure as follows:
Corporate Governance: provides monitoring, control and reporting to ensure compliance with regulations and supports continued corporate improvement;
Managed Partner Extranet: secured seamless publishing and consumption of web services with partners and branch locations;
Web Service Performance: ensures availability and performance of web services as per corporate requirements or Service Level Agreements (SLAs);
Corporate Agility & Application Sensitivity: provides application-level routing and message translation based on content of SOAP headers, XML tags, or other message content;
Application Security: provides application-level security by ensuring messages are well formed, detecting XML-based attacks and enforcing application data encryption policy;
Life Cycle Management: provides controlled publishing of web services with rollback;
System Features: provides reliability, scalability, and compliance with open standards.

These and other functions have been disclosed herein, and/or in one or more of the above-referenced related patent applications.

What has been described is merely illustrative of the application of principles of embodiments of the invention. Other arrangements and methods can be implemented by those skilled in the art without departing from the scope of the present invention.

For example, as noted above, the present invention is in no way limited to the particular divisions of functions, method steps, or data structure contents shown in the drawings and explicitly described above.

In addition, although described primarily in the context of methods and systems, other implementations of embodiments of the invention are also contemplated, as data structures and/or instructions stored on one or more machine-readable media, for example.

## Claims

1. A machine-implemented method comprising:
receiving a network service message that is associated with a network service provided in a secure domain and is destined for an external user of the network service located outside the secure domain;
identifying, from a plurality of service-specific protection policies specifying for respective different network services sensitive information that is to be protected and a protection action to be performed to protect the sensitive information, a service-specific protection policy associated with the network service, the identified service-specific protection policy specifying sensitive information that is to be protected and a protection action to be performed on the received network service message to protect the sensitive information specified in the identified service-specific protection policy;
determining whether the received network service message includes the sensitive information specified in the identified service-specific protection policy; and
where the received network service message includes the sensitive information specified in the identified service-specific protection policy, performing, on the received network service message, the protection action specified in the identified service-specific protection policy to protect the sensitive information specified in the identified service-specific protection policy.

2. The method of claim 1, wherein the protection action comprises one or more of: removing at least the sensitive information from the received network service message, encrypting at least the sensitive information in the received network service message, and digitally signing at least the sensitive information in the received network service message.

3. The method of claim 1, wherein the protection action is performed on at least a portion of the received network service message.

4. The method of claim 1, wherein determining comprises parsing at least a portion of the received network service message.

5. The method of any one of claims 1 to 4, wherein determining and performing the action comprise executing, in a regulation specification language (RSL) environment, an RSL program that defines sensitive information detection criteria and protection actions associated with an information protection regulation.

6. The method of claim 5, wherein the RSL program comprises table entries specifying respective sensitive information detection criteria and corresponding protection actions, and wherein executing comprises sequentially processing at least a portion of the received network service message for each table entry.

7. The method of claim 5, wherein the RSL program comprises extensible Stylesheet Language Transformation (XSLT) operations.

8. The method of claim 7, wherein the XSLT operations employ extensible Markup Language (XML) extensions to support encryption as the protection action.

9. The method of any one of claims 1 to 4, implemented at a web services node of a communication network within the secure domain.

10. The method of claim 5, wherein the information protection regulation comprises one of a plurality of information protection regulations, the executing comprising executing one a plurality of regulation-specific modules that specify criteria for conformance to respective specific regulations of the plurality of information protection regulations.

11. The method of claim 1, wherein the plurality of service-specific protection policies are specified in respective policies for the different network services, the policies for the different network services further comprising one or more of: respective service access restrictions for the different network services, respective information translation/formatting requirements of the different network services, and respective monitoring requirements for usage of the different network services.

12. The method of claim 5, wherein the regulation specification language comprises a plurality of regulation-specific modules that offer complete criteria for conformance to respective different information protection regulations.

13. A machine-readable medium storing instructions which when executed perform the method of any one of claims 1 to 4.

14. An apparatus comprising:
a processor to receive a network service message that is associated with a network service provided in a secure domain and is destined for an external user of the network service located outside the secure domain; to identify, from a plurality of service-specific protection policies specifying for respective different network services sensitive information that is to be protected and a protection action to be performed to protect the sensitive information, a service-specific protection policy associated with the network service, the identified service-specific protection policy specifying sensitive information that is to be protected and a protection action to be performed on the received network service message to protect the sensitive information specified in the identified service-specific protection policy; and to determine whether the received network service message includes the sensitive information specified in the identified service-specific protection policy; and
a protection module operatively coupled to the processor to, where the received network service message includes the sensitive information specified in the identified service-specific protection policy, perform, on the received network service message, the protection action specified in the identified service-specific protection policy to protect the sensitive information specified in the identified service-specific protection policy.

15. The apparatus of claim 14, wherein the protection action comprises one or more of: removing at least the sensitive information from the received network service message, encrypting at least the sensitive information in the received network service message, and digitally signing at least the sensitive information in the received network service message.

16. The apparatus of claim 14, wherein the processor comprises a parser for parsing at least a portion of the received network service message.

17. The apparatus of any one of claims 14 to 16, wherein at least one of the processor and the protection module implements a regulation specification language (RSL) execution environment for executing an RSL program that defines sensitive information detection criteria and protection actions associated with an information protection regulation.

18. The apparatus of claim 17, wherein the RSL program comprises table entries specifying respective sensitive information detection criteria and corresponding protection actions, and wherein executing the RSL program comprises sequentially processing at least a portion of the received network service message for each table entry.

19. The apparatus of claim 17, wherein the RSL program comprises extensible Stylesheet Language Transformation (XSLT) operations.

20. The apparatus of claim 19, wherein the XSLT operations employ extensible Markup Language (XML) extensions to support encryption as the protection action.

21. The apparatus of any one of claims 14 to 16, further comprising:
a memory, operatively coupled to the processor, for storing the plurality of service-specific protection policies.

22. A web services node comprising:
the apparatus of any one of claims 14 to 16.

23. The web services node of claim 22, implemented in the secure domain.

24. The web services node of claim 22, implemented in an external domain with which the external user is associated.

## Patentansprüche

1. Maschinenimplementiertes Verfahren, umfassend:
Empfangen einer Netzwerkdienst-Nachricht, welche mit einem in einer gesicherten Domain bereitgestellten Netzwerkdienst assoziiert und für einen externen Nutzer des Netzwerkdienstes, welcher sich außerhalb der gesicherten Domain befindet, bestimmt ist;
Identifizieren, unter einer Vielzahl von dienstspezifischen Schutzrichtlinien, welche für jeweilige unterschiedliche Netzwerkdienste sensible Informationen, die zu schützen sind, und eine für den Schutz der sensiblen Informationen durchzuführende Schutzaktion spezifizieren, einer mit dem Netzwerkdienst assoziierten dienstspezifischen Schutzrichtlinie, wobei die identifizierte dienstspezifische Schutzrichtlinie sensible Informationen, die zu schützen sind, und eine auf der empfangenen Netzwerkdienst-Nachricht durchzuführende Aktion zum Schutz der in der identifizierten dienstspezifischen Schutzrichtlinie spezifizierten sensiblen Informationen spezifiziert;
Ermitteln, ob die empfangene Netzwerkdienst-Nachricht die in der identifizierten dienstspezifischen Schutzrichtlinie spezifizierten sensiblen Informationen enthält; und
wenn die empfangene Netzwerkdienst-Nachricht die in der identifizierten dienstspezifischen Schutzrichtlinie spezifizierten sensiblen Informationen enthält, Durchführen, auf der empfangenen Netzwerkdienst-Nachricht, der in der identifizierten dienstspezifischen Schutzrichtlinie spezifizierten Schutzaktion, um die in der identifizierten dienstspezifischen Schutzrichtlinie spezifizierten sensiblen Informationen zu schützen.

2. Verfahren nach Anspruch 1, wobei die Schutzaktion eine oder mehrere der folgenden Aktionen umfasst: Entfernen zumindest der sensiblen Informationen aus der empfangenen Netzwerkdienst-Nachricht, Verschlüsseln zumindest der sensiblen Informationen in der empfangenen Netzwerkdienst-Nachricht, und digitales Signieren zumindest der sensiblen Informationen in der empfangenen Netzwerkdienst-Nachricht.

3. Verfahren nach Anspruch 1, wobei die Schutzaktion auf zumindest einem Teil der empfangenen Netzwerkdienst-Nachricht durchgeführt wird.

4. Verfahren nach Anspruch 1, wobei das Ermitteln das Parsen zumindest eines Teils der empfangenen Netzwerkdienst-Nachricht umfasst.

5. Verfahren nach einem beliebigen der Ansprüche 1 bis 4, wobei das Ermitteln und das Durchführen der Aktion das Ausführen, in einer Regelungsspezifikationssprachen- bzw. RSL-Umgebung, eines RSL-Programms, welches Kriterien für die Erkennung sensibler Informationen und mit einer Informationsschutzregelung assoziierte Schutzaktionen definiert, umfasst.

6. Verfahren nach Anspruch 5, wobei das RSL-Programm Tabelleneinträge, welche jeweilige Kriterien für die Erkennung sensibler Informationen und entsprechende Schutzaktionen spezifizieren, umfasst, und wobei das Ausführen das sequenzielle Verarbeiten zumindest eines Teils der empfangenen Netzwerkdienst-Nachricht für jeden Tabelleneintrag umfasst.

7. Verfahren nach Anspruch 5, wobei das RSL-Programm erweiterbare Stylesheet-Sprachentransformations- bzw. XSLT-Operationen umfasst.

8. Verfahren nach Anspruch 7, wobei die XSLT-Operationen erweiterbare Auszeichnungssprachen- bzw. XML-Erweiterungen für die Unterstützung der Verschlüsselung als die Schutzaktion anwenden.

9. Verfahren nach einem beliebigen der Ansprüche 1 bis 4, implementiert an einem Webdienste-Knoten eines Kommunikationsnetzwerks innerhalb der gesicherten Domain.

10. Verfahren nach Anspruch 5, wobei die Informationsschutzregelung eine einer Vielzahl von Informationsschutzregelungen umfasst, wobei das Ausführen das Ausführen eines einer Vielzahl von regelungsspezifischen Modulen, welche Kriterien für die Konformität mit jeweiligen spezifischen Regelungen der Vielzahl von Informationsschutzregelungen spezifizieren, umfasst.

11. Verfahren nach Anspruch 1, wobei die Vielzahl von dienstspezifischen Schutzrichtlinien in jeweiligen Richtlinien für die unterschiedlichen Netzwerkdienste spezifiziert sind, wobei die Richtlinien für die unterschiedlichen Netzwerkdienste weiterhin eine der Folgenden umfassen: jeweilige Dienstzugangsbeschränkungen für die unterschiedlichen Netzwerkdienste, jeweilige Informationsübersetzungs-/formatierungsanforderungen der unterschiedlichen Netzwerkdienste, und jeweilige Überwachungsanforderungen für die Nutzung der unterschiedlichen Netzwerkdienste.

12. Verfahren nach Anspruch 5, wobei die Regelungsspezifikationssprache eine Vielzahl von regelungsspezifischen Modulen umfasst, welche komplette Kriterien für die Konformität mit jeweiligen unterschiedlichen Informationsschutzregelungen bieten.

13. Maschinenlesbares Medium, auf dem Befehle gespeichert sind, welche bei deren Ausführung das Verfahren eines beliebigen der Ansprüche 1 bis 4 durchführen.

14. Vorrichtung, umfassend:
Einen Prozessor für den Empfang einer Netzwerkdienst-Nachricht, welche mit einem in einer gesicherten Domain bereitgestellten Netzwerkdienst assoziiert und für einen externen Nutzer des Netzwerkdienstes, welcher sich außerhalb der gesicherten Domain befindet, bestimmt ist; für die Identifizierung, unter einer Vielzahl von dienstspezifischen Schutzrichtlinien, welche für jeweilige unterschiedliche Netzwerkdienste sensible Informationen, die zu schützen sind, und eine für den Schutz der sensiblen Informationen durchzuführende Schutzaktion spezifizieren, einer mit dem Netzwerkdienst assoziierten dienstspezifischen Schutzrichtlinie, wobei die identifizierte dienstspezifische Schutzrichtlinie sensible Informationen, die zu schützen sind, und eine auf der empfangenen Netzwerkdienst-Nachricht durchzuführende Aktion zum Schutz der in der identifizierten dienstspezifischen Schutzrichtlinie spezifizierten sensiblen Informationen spezifiziert; und für die Ermittlung, ob die empfangene Netzwerkdienst-Nachricht die in der identifizierten dienstspezifischen Schutzrichtlinie spezifizierten sensiblen Informationen enthält; und
ein Schutzmodul, welches betriebsfähig an den Prozessor gekoppelt ist, um, wenn die empfangene Netzwerkdienst-Nachricht die in der identifizierten dienstspezifischen Schutzrichtlinie spezifizierten sensiblen Informationen enthält, auf der empfangenen Netzwerkdienst-Nachricht die in der identifizierten dienstspezifischen Schutzrichtlinie spezifizierte Schutzaktion durchzuführen, um die in der identifizierten dienstspezifischen Schutzrichtlinie spezifizierten sensiblen Informationen zu schützen.

15. Vorrichtung nach Anspruch 14, wobei die Schutzaktion eine oder mehrere der folgenden Aktionen umfasst: Entfernen zumindest der sensiblen Informationen aus der empfangenen Netzwerkdienst-Nachricht, Verschlüsseln zumindest der sensiblen Informationen in der empfangenen Netzwerkdienst-Nachricht, und digitales Signieren zumindest der sensiblen Informationen in der empfangenen Netzwerkdienst-Nachricht.

16. Vorrichtung nach Anspruch 14, wobei der Prozessor einen Parser zum Parsen zumindest eines Teils der empfangenen Netzwerkdienst-Nachricht umfasst.

17. Vorrichtung nach einem beliebigen der Ansprüche 14 bis 16, wobei zumindest entweder der Prozessor oder das Schutzmodul eine Regelungsspezifikationssprachen- bzw. RSL-Umgebung zur Ausführung eines RSL-Programms, welches Kriterien für die Erkennung sensibler Informationen und mit einer Informationsschutzregelung assoziierte Schutzaktionen definiert, implementiert.

18. Vorrichtung nach Anspruch 17, wobei das RSL-Programm Tabelleneinträge, welche jeweilige Kriterien für die Erkennung sensibler Informationen und entsprechende Schutzaktionen spezifizieren, umfasst, und wobei das Ausführen des RSL-Programms das sequenzielle Verarbeiten zumindest eines Teils der empfangenen Netzwerkdienst-Nachricht für jeden Tabelleneintrag umfasst.

19. Vorrichtung nach Anspruch 17, wobei das RSL-Programm erweiterbare Stylesheet-Sprachentransformations- bzw. XSLT-Operationen umfasst.

20. Vorrichtung nach Anspruch 19, wobei die XSLT-Operationen erweiterbare Auszeichnungssprachen- bzw. XML-Erweiterungen für die Unterstützung der Verschlüsselung als die Schutzaktion anwenden.

21. Vorrichtung nach einem beliebigen der Ansprüche 14 bis 16, weiterhin umfassend:
Einen Speicher, welcher betriebsfähig an den Prozessor angeschlossen ist, zum Speichern der Vielzahl von dienstspezifischen Schutzrichtlinien.

22. Webdienste-Knoten, umfassend:
Die Vorrichtung gemäß einem beliebigen der Ansprüche 14 bis 16.

23. Webdienste-Knoten nach Anspruch 22, implementiert in der gesicherten Domain.

24. Webdienste-Knoten nach Anspruch 22, implementiert in einer externen Domain, mit welcher der externe Nutzer assoziiert ist.

## Revendications

1. Procédé mis en oeuvre par machine comprenant :
la réception d'un message de service de réseau qui est associé à un service de réseau fourni dans un domaine sécurisé et est destiné à un utilisateur externe du service de réseau situé en dehors du domaine sécurisé ;
l'identification, parmi une pluralité de politiques de protection spécifiques au service spécifiant pour des services de réseau différents respectifs des informations sensibles qui doivent être protégées et une action de protection à effectuer pour protéger les informations sensibles, d'une politique de protection spécifique au service associée au service de réseau, la politique de protection spécifique au service identifiée spécifiant des informations sensibles qui doivent être protégées et une action de protection à effectuer sur le message de service de réseau reçu pour protéger les informations sensibles spécifiées dans la politique de protection spécifique au service identifiée ;
la détermination de l'inclusion ou non dans le message de service de réseau reçu des informations sensibles spécifiées dans la politique de protection spécifique au service identifiée ; et
lorsque le message de service de réseau reçu inclut les informations sensibles spécifiées dans la politique de protection spécifique au service identifiée, l'exécution, sur le message de service de réseau reçu, de l'action de protection spécifiée dans la politique de protection spécifique au service identifiée pour protéger les informations sensibles spécifiées dans la politique de protection spécifique au service identifiée.

2. Procédé selon la revendication 1, dans lequel l'action de protection comprend un ou plusieurs parmi : la suppression d'au moins les informations sensibles du message de service de réseau reçu, le cryptage d'au moins les informations sensibles dans le message de service de réseau reçu, et la signature numérique d'au moins les informations sensibles dans le message de service de réseau reçu.

3. Procédé selon la revendication 1, dans lequel l'action de protection est effectuée sur au moins une partie du message de service de réseau reçu.

4. Procédé selon la revendication 1, dans lequel la détermination comprend l'analyse d'au moins une partie du message de service de réseau reçu.

5. Procédé selon l'une quelconque des revendications 1 à 4, dans lequel la détermination et l'exécution de l'action comprennent l'exécution, dans un environnement de langage de spécification de réglementation (RSL pour regulation specification language), d'un programme RSL qui définit des critères de détection d'informations sensibles et des actions de protection associées à une réglementation de protection d'informations.

6. Procédé selon la revendication 5, dans lequel le programme RSL comprend des entrées de table spécifiant des critères de détection d'informations sensibles respectifs et des actions de protection correspondantes, et dans lequel l'exécution comprend le traitement séquentiel d'au moins une partie du message de service de réseau reçu pour chaque entrée de table.

7. Procédé selon la revendication 5, dans lequel le programme RSL comprend des opérations de Transformation de langage de feuille de style extensible (XSLT pour eXtensible Stylesheet Language Transformation).

8. Procédé selon la revendication 7, dans lequel les opérations XSLT emploient des extensions de Langage de balisage extensible (XML pour eXtensible Markup Language) pour supporter le cryptage comme l'action de protection.

9. Procédé selon l'une quelconque des revendications 1 à 4, mis en oeuvre au niveau d'un noeud de services web d'un réseau de communication à l'intérieur du domaine sécurisé.

10. Procédé selon la revendication 5, dans lequel la réglementation de protection d'informations comprend une d'une pluralité de réglementations de protection d'informations, l'exécution comprend l'exécution d'un d'une pluralité de modules spécifiques à la réglementation qui spécifient des critères pour la conformité à des réglementations spécifiques respectives de la pluralité de réglementations de protection d'informations.

11. Procédé selon la revendication 1, dans lequel la pluralité de politiques de protection spécifiques au service sont spécifiées dans des politiques respectives pour les différents services de réseau, les politiques pour les différents services de réseau comprenant en outre un ou plusieurs parmi : des restrictions d'accès au service respectives pour les différents services de réseau, des exigences de traduction/formatage d'informations respectives des différents services de réseau, et des exigences de surveillance respectives pour l'utilisation des différents services de réseau.

12. Procédé selon la revendication 5, dans lequel le langage de spécification de réglementation comprend une pluralité de modules spécifiques à la réglementation qui offrent des critères complets pour la conformité à des réglementations de protection d'informations différentes respectives.

13. Support lisible par machine stockant des instructions qui, lorsqu'elles sont exécutées, effectuent le procédé selon l'une quelconque des revendications 1 à 4.

14. Appareil comprenant :
un processeur pour recevoir un message de service de réseau qui est associé à un service de réseau fourni dans un domaine sécurisé et est destiné à un utilisateur externe du service de réseau situé en dehors du domaine sécurisé ; pour identifier, parmi une pluralité de politiques de protection spécifiques au service spécifiant pour des services de réseau différents respectifs des informations sensibles qui doivent être protégées et une action de protection à effectuer pour protéger les informations sensibles, une politique de protection spécifique au service associée au service de réseau, la politique de protection spécifique au service identifiée spécifiant des informations sensibles qui doivent être protégées et une action de protection à effectuer sur le message de service de réseau reçu pour protéger les informations sensibles spécifiées dans la politique de protection spécifique au service identifiée ; et pour déterminer si le message de service de réseau reçu inclut les informations sensibles spécifiées dans la politique de protection spécifique au service identifiée ; et
un module de protection couplé fonctionnellement au processeur pour, lorsque le message de service de réseau reçu inclut les informations sensibles spécifiées dans la politique de protection spécifique au service identifiée, effectuer, sur le message de service de réseau reçu, l'action de protection spécifiée dans la politique de protection spécifique au service identifiée pour protéger les informations sensibles spécifiées dans la politique de protection spécifique au service identifiée.

15. Appareil selon la revendication 14, dans lequel l'action de protection comprend un ou plusieurs parmi : la suppression d'au moins les informations sensibles du message de service de réseau reçu, le cryptage d'au moins les informations sensibles dans le message de service de réseau reçu, et la signature numérique d'au moins les informations sensibles dans le message de service de réseau reçu.

16. Appareil selon la revendication 14, dans lequel le processeur comprend un analyseur pour analyser au moins une partie du message de service de réseau reçu.

17. Appareil selon l'une quelconque des revendications 14 à 16, dans lequel au moins un du processeur et du module de protection met en oeuvre un environnement d'exécution de langage de spécification de réglementation (RSL pour regulation specification language) pour exécuter un programme RSL qui définit des critères de détection d'informations sensibles et des actions de protection associées à une réglementation de protection d'informations.

18. Appareil selon la revendication 17, dans lequel le programme RSL comprend des entrées de table spécifiant des critères de détection d'informations sensibles respectifs et des actions de protection correspondantes, et dans lequel l'exécution du programme RSL comprend le traitement séquentiel d'au moins une partie du message de service de réseau reçu pour chaque entrée de table.

19. Appareil selon la revendication 17, dans lequel le programme RSL comprend des opérations de Transformation de langage de feuille de style extensible (XSLT pour eXtensible Stylesheet Language Transformation).

20. Appareil selon la revendication 19, dans lequel les opérations XSLT emploient des extensions de Langage de balisage extensible (XML pour eXtensible Markup Language) pour supporter le cryptage comme l'action de protection.

21. Appareil selon l'une quelconque des revendications 14 à 16, comprenant en outre :
une mémoire, couplée fonctionnellement au processeur, pour stocker la pluralité de politiques de protection spécifiques au service.

22. Noeud de services web comprenant :
l'appareil selon l'une quelconque des revendications 14 à 16.

23. Noeud de services web selon la revendication 22, mis en oeuvre dans le domaine sécurisé.

24. Noeud de services web selon la revendication 22, mis en oeuvre dans un domaine externe auquel l'utilisateur externe est associé.
